# EUROPÄISCHE PATENTSCHRIFT

(11) **EP 2 694 916 B1**
(45) Veröffentlichungstag und Bekanntmachung des Hinweises auf die Patenterteilung: **27.12.2017**
(21) Anmeldenummer: 12714656.1
(22) Anmeldetag: 05.04.2012
(51) Int. Cl.: B60W 30/06, B62D 15/02, G05D 1/02, G08G 1/16, G01C 21/16, G01C 21/28

(54) **VERFAHREN ZUR BESTIMMUNG DER POSITION EINES SICH BEWEGENDEN FAHRZEUGS UND MANÖVERASSISTENZSYSTEM**
METHOD FOR DETERMINING THE POSITION OF A MOVING VEHICLE, AND MANEUVERING ASSISTANCE SYSTEM
PROCÉDÉ DE DÉTERMINATION DE LA POSITION D'UN VÉHICULE SE DÉPLAÇANT ET SYSTÈME D'ASSISTANCE AUX MANOEUVRES

(30) Priorität: 08.04.2011 DE 102011007024
(43) Veröffentlichungstag der Anmeldung: 12.02.2014
(73) Patentinhaber: Robert Bosch GmbH, 70442 Stuttgart (DE)
(72) Erfinder: MIELENZ, Holger, 73760 Ostfildern (DE)
(86) Internationale Anmeldenummer: PCT/EP2012/056289
(87) Internationale Veröffentlichungsnummer: WO 2012/136769

(56) Entgegenhaltungen:
- EP-A1- 2 385 346
- WO-A1-2011/120141
- DE-A1- 19 962 997

## Beschreibung

Die vorliegende Erfindung betrifft ein Verfahren zur Bestimmung der Position eines sich bewegenden Fahrzeugs sowie ein Manöverassistenzsystem für ein Fahrzeug zur Ausführung eines solchen Verfahrens.

### Stand der Technik

Es sind grundsätzlich Verfahren bekannt, um die Position eines sich bewegenden Fahrzeugs zu bestimmen. Solche Verfahren verwenden unterschiedlichste Sensoriksysteme, um aus diesen Daten zu erfassen und Rückschlüsse auf die tatsächliche Position des Fahrzeugs zu ziehen. Dabei sind grundsätzlich zwei unterschiedliche Sensoriksysteme zu unterscheiden. Zum einen sind sogenannte Inertialsensorsysteme vorhanden, also Sensoren, die kinematische Fahrzeuggrößen erfassen, diese können z.B. die Geschwindigkeit, den Lenkeinschlag oder die Umdrehungszahl eines Rades sein. Die zweiten Formen von Sensorsystemen befassen sich mit Umfeldsensorik, also z.B. Lasersensorik, Videosensorik oder Ultraschallsensorik. Bei bekannten Verfahren werden diese Sensorsysteme miteinander kombiniert und für die Bestimmung der Position eines Fahrzeugs mit Bezug auf seine Umfeldobjekte eingesetzt. Dies erfolgt insbesondere bei Langsamfahrsituation des Fahrzeugs, also bei der Bewegung des Fahrzeugs in einem Parkgelände, einem Parkhaus oder vor und während des Einparkvorganges.

Bei den bekannten Verfahren ist es nachteilhaft, dass insbesondere bei Langsamfahrten eines Fahrzeugs hohe Fehlerraten bei der Verwendung der bekannten Sensorik entstehen. So ist z.B. die Bestimmung der Geschwindigkeit bzw. der Umdrehungszahl eines Rades und die daraus errechnete zurückgelegte Strecke des Fahrzeugs eine Funktion mit Abhängigkeiten hinsichtlich der aktuellen Temperatur, des aktuellen Luftdruckes und des aktuellen Abnutzungszustandes der Reifen. Auch weitere Sensoren, wie z.B. für die Erfassung des Lenkeinschlages, sind fehlerbehaftet und erzeugen damit fehlerbehaftete Berechnungsergebnisse für die aktuelle Position des Fahrzeugs. In bekannten Verfahren spricht man bei dem Verschalten unterschiedlicher Sensoriken zur Ermittlung der aktuellen Position von einer sogenannten Kopplungsnavigation.

Da insbesondere in zukünftigen Fahrzeugen nicht nur kurze Strecken im Langsamfahrmodus überwacht, sondern insbesondere auch längere Strecken in einer solchen Langsamfahrsituation berücksichtigt werden sollen, sind die voranstehend erwähnten Nachteile noch stärker gewichtet. Dies beruht auf der Tatsache, dass über einen längeren Zeitraum einer Langsamfahrsituation sich die Fehler akkumulieren und inakzeptabel große Werte erreichen. Bewegt sich ein Fahrzeug z.B. durch eine Parkgarage, so können sich bei einer zurückgelegten Strecke von wenigen hundert Metern Fehler von bis zu 20, 30 oder noch mehr Metern akkumulieren. Wird nun die Sensorik dazu verwendet, ein Umfeldmodell in zwei Dimensionen oder auch in drei Dimensionen um das Fahrzeug anzulegen, sind solche Fehlergrößen inakzeptabel, da sie zu einem erheblichen Risiko bei dem Einsatz eines auf diese Weise erzeugten Umfeldmodells führen würden.

Aus der DE 19962997 A1 ist ein Verfahren zur Kalibrierung eines Sensorsystems zur Erfassung und Auswertung von Objekten im Kursverlauf eines Fahrzeugs. Dabei werden charakteristische Daten der Objekte, einschließlich der Fahrbahn erfasst und unter Berücksichtigung der Eigenbewegung des Fahrzeugs in ruhende und sich bewegende Objekte klassifiziert und eine Fahrzeugposition innerhalb eines Koordinatensystems prädiziert. Durch Anwendung eines Fehlermodells wird diese Position iterativ korrigiert.

### Offenbarung der Erfindung

Es ist Aufgabe der vorliegenden Erfindung, die voranstehend beschriebenen Nachteile bekannter Verfahren zur Bestimmung der Position eines sich bewegenden Fahrzeugs sowie eines entsprechenden Manöverassistenzsystems für Fahrzeuge zu beheben. Insbesondere ist es Aufgabe der vorliegenden Erfindung, ein Verfahren zur Bestimmung der Position eines sich bewegenden Fahrzeugs sowie ein entsprechendes Manöverassistenzsystem für ein Fahrzeug zur Verfügung zu stellen, welche in einfacher und kostengünstiger Weise die Möglichkeit bieten, trotz der Verwendung einer Kopplungsnavigation, hohe Fehlergrößen bei der Bestimmung der Fahrzeugposition in Langsamfahrsituationen zu vermeiden.
Voranstehende Aufgabe wird gelöst durch ein Verfahren mit den Merkmalen des unabhängigen Anspruchs 1 sowie durch ein Manöverassistenzsystem mit den Merkmalen des unabhängigen Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Manöverassistenzsystem und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren zur Bestimmung der Position eines sich bewegenden Fahrzeugs bezüglich das Fahrzeug umgebenden Umfeldobjekten zeichnet sich durch die folgenden Schritte aus:
- Erfassen der Umgebung des Fahrzeugs mit Hilfe eines Umfeldsensorsystems,
- Erfassen kinematischer Fahrzeuggrößen des Fahrzeugs mit Hilfe eines Intertialsensorsystems,
- Prädiktion der Position des Fahrzeugs auf Basis zumindest eines der vorangegangenen Erfassungsschritte,
- Anwendung eines Fehlermodells auf die prädizierte Position des Fahrzeugs zur Erzeugung einer korrigierten Position des Fahrzeugs.
Ein erfindungsgemäßes Verfahren setzt also auf bekannten Verfahren auf und optimiert diese. Die Optimierung erfolgt dabei durch das Anwenden eines Fehlermodells, so dass die prädizierte Position, also die Position, die auf Basis der erfassten Daten beruht, korrigiert wird. Das Fehlermodell ist dabei zumindest teilweise für den Fahrer des Fahrzeugs spezifisch. Insbesondere adaptive Fehlermodelle, welche sich während des Betriebs des Fahrzeugs an dasselbe anpassen und sich selbst optimieren, sind im Rahmen der vorliegenden Erfindung denkbar und werden später noch ausführlich beschrieben.
Ein erfindungsgemäßes Verfahren bringt den Vorteil mit sich, dass bereits bestehende Assistenzsysteme mit einem erfindungsgemäßen Verfahren nachgerüstet werden können. Dies ist möglich, da keine zusätzlichen Sensorsysteme notwendig sind. Vielmehr wird ausschließlich durch die Korrelation bereits bestehender Sensorsysteme und eines bereits bestehenden Verfahrens mit dem erfindungsgemäßen Fehlermodell eine Optimierung der Bestimmung der aktuellen Position des Fahrzeugs erreicht.
Ein weiterer Vorteil, welcher mit Hilfe eines erfindungsgemäßen Verfahrens zu erzielen ist, ist die Tatsache, dass dadurch kleinere und damit kostengünstigere Sensoren für die Umfeldsensorsysteme einsetzbar werden. So ist es möglich, dass die Schritte des vorliegenden Verfahrens dazu verwendet werden, ein zweidimensionales oder aber ein dreidimensionales Umfeldmodell zu erstellen. Dies erfolgt z.B. durch die Speicherung der einzelnen Daten und den Aufbau eines Umfeldmodells durch die Auswertung derselben. Dementsprechend kann sozusagen im Vorbeifahren ein Umfeldmodell auch mit kleinen Sensoren erfasst werden. Durch die Speicherung in dem Umfeldmodell bleiben diese Daten dem Fahrzeug erhalten. Das bedeutet also, dass ein Fahrzeug auch über Umfeldobjekte Bescheid weiß, welche aktuell nicht mehr von den Sensoren, insbesondere den Umfeldsensoren, wahrgenommen werden können, jedoch bereits in einem vorangegangen Zeitschritt von diesen erfassten wurden. Kleinere Sensoren, insbesondere kleinere Sensoren mit einem kleineren Öffnungswinkel für die Erfassung des Umfelds, sind dementsprechend kostengünstiger und auch von geringerem Gewicht.

Ein erfindungsgemäßes Verfahren kann dabei sowohl bei der Korrektur der aktuellen Position des Fahrzeugs, wie auch bei dem Vorhersehen einer zukünftigen Position des Fahrzeugs Verwendung finden. So ist es möglich, durch den Abgleich und die Korrektur der aktuellen Position des Fahrzeugs auch eine in der Zukunft liegende, noch zu erreichende Position des Fahrzeugs dahingehend zu optimieren, dass der Fehler beim Erreichen dieser Position zwischen dem fahrzeugeigenen Koordinatensystem und dem Umgebungskoordinatensystem auf ein Minimum reduziert ist.

Bei der Erfassung der Umgebung des Fahrzeugs sowie der kinematischen Fahrzeuggrößen durch die beiden Sensorsysteme werden vorzugsweise Daten erzeugt, die insbesondere gespeichert werden. Die Datenerzeugung kann dabei sowohl in analoger, als auch in digitaler Form erfolgen. Jedoch wird häufig zumindest eine nachfolgende Auswertung und/oder Speicherung in digitaler Form dieser Daten durchgeführt werden.

Die Erfassung der Umgebung des Fahrzeugs sowie die Erfassung der kinematischen Fahrzeuggrößen des Fahrzeugs und damit auch die Durchführung eines erfindungsgemäßen Verfahrens erfolgen dabei vorteilhafterweise im Wesentlichen kontinuierlich. Insbesondere wird ständig im Betrieb des Fahrzeugs, also sowohl während des Haltens, als auch während des Fahrens, also insbesondere solange der Motor läuft, das erfindungsgemäße Verfahren durchgeführt. Durch die ständige Fehlerkorrektur wird sozusagen die aktuelle Position des Fahrzeugs ständig aktuell und im korrigierten Zustand gehalten.

Ein Fehlermodell kann erstellt und/oder optimiert werden, indem die prädizierte Position mit Referenzsystemen verglichen wird. So ist es möglich, z.B. Autos, die mit einem Navigationssystem ausgestattet sind, für eine solche Referenzierung einzusetzen. So können die Daten des Navigationssystems für einen Positionsvergleich mit der durch die Daten der beiden Erfassungsschritte erzeugten prädizierten Positionen herausgezogen werden, so dass durch die Differenz eine Referenzierung stattfindet. Diese Referenzierung wird ausgewertet und hinsichtlich des erkannten Fehlers im Fehlermodell eingearbeitet. Dies kann einmalig für ein Fahrzeug, z.B. während der Inbetriebnahme erfolgen, ist jedoch auch im laufenden Betrieb möglich. Auch die spätere Referenzierung an bereits erkannten Objekten ist selbstverständlich denkbar. So ist es möglich, dass ein Fahrzeug mit einem erfindungsgemäßen Verfahren einen Punkt zu einem ersten Zeitpunkt erreicht und erfasst. Erreicht das Fahrzeug zu einem späteren Zeitpunkt den gleichen Punkt wieder in gleicher oder in einer anderen Konstellation, so erkennt es diesen Punkt, z.B. ein Umfeldobjekt, und vergleicht dessen aktuell gemessene Entfernung zu der prädizierten Entfernung. Aus diesem Fehler kann eine Referenzierung gezogen werden, welche ebenfalls Einfluss in das Fehlermodell finden kann.

Es kann von Vorteil sein, wenn bei einem erfindungsgemäßen Verfahren Daten, die durch zumindest einen der beiden Erfassungsschritte erzeugt werden, gespeichert werden, um ein Umfeldmodell von das Fahrzeug umgebenden Umfeldobjekten zu erstellen. Mit anderen Worten wird auf diese Weise dem Fahrzeug, insbesondere dessen Steuereinheit, ein Bild zur Verfügung gestellt, das eine Abbildung der Umgebung darstellt. Dabei können je nach Art der Umfeldsensorik und/oder der Inertialsensoren sowohl zweidimensionale, als auch dreidimensionale Abbildungen für dieses Umfeldmodell zur Verfügung gestellt werden. Das Erzeugen eines solchen Umfeldmodells hat den Vorteil, dass dem Fahrzeug eine umfassende Datenmenge zur Verfügung steht, auch wenn nur kleine, insbesondere hinsichtlich ihrer Funktionalität eingeschränkte Sensoren vorhanden sind. Dementsprechend kann eine zwei- oder dreidimensionale Auswertung des Umfeldmodells dazu führen, dass bessere Vorhersagen für Steueraktionen des Fahrzeugs getroffen werden können. Z.B. können Parklücken besser für das Fahrzeug für den Einparkvorgang ausgewählt oder Steuersignale während des Bewegens des Fahrzeugs durch dieses Umfeldmodell gegeben werden.

Auch ist es möglich, dass durch Speichern und das Erzeugen des Umfeldmodells eine Referenzierung beim Wiedererreichen von bekannten Stellen erfolgt. Dementsprechend kann das Umfeldmodell nicht nur dem primären Sinn der Verbesserung der Steuerung des Fahrzeugs, sondern auch einen sekundären Sinn, nämlich die Verbesserung des Fehlermodells verfolgen.

Ein weiterer Vorteil ist es, wenn bei einem erfindungsgemäßen Verfahren das Fehlermodell ein für das Fahrzeug ausgelegtes und vordefiniertes Fehlermodell ist. Das bedeutet, dass das Fehlermodell im laufenden Betrieb des Fahrzeugs konstant eingehalten wird. Diese Vordefinition kann z.B. bei dessen Inbetriebnahme erstellt werden. Dabei kann auch ein Fehlermodell für einen Fahrzeugtyp oder eine ganze Fahrzeugklasse eingesetzt werden. So ist es möglich in besonders einfacher und kostengünstiger Weise ein gemeinsames Fehlermodell zur Verfügung zu stellen, welches bereits bei der Inbetriebnahme des Fahrzeugs in der entsprechenden Steuereinheit des Fahrzeugs implementiert wird. Zwar sind bei einer solchen Ausführungsform geringere Genauigkeiten zu erreichen als bei einer absolut fahrzeugspezifischen und betriebsspezifischen Ausbildung des Fehlermodells, jedoch ist ein großer Kostenvorteil hinsichtlich der Erzeugung eines solchen Fehlermodells vorhanden.
Alternativ ist es möglich, dass bei einem erfindungsgemäßen Verfahren das Fehlermodell zumindest teilweise während des Betriebs des Fahrzeugs erstellt und/oder optimiert wird. Bei einer solchen Ausführungsform handelt es sich also um ein sogenanntes Online-Fehlermodell, welches in einer ständigen Optimierung Verwendung findet. Die Optimierung kann dabei z.B. in Korrelation mit einem GPS gestützten Navigationssystem oder aber unter Verwendung von einem bereits in einem erstellten Umfeldmodell bekannten Umfeldobjekt durchgeführt werden. Entscheidend ist, dass für die Optimierung des Fehlermodells bzw. für dessen Erstellung in bestimmten oder unbestimmten Zeitabschnitten eine Referenzierungsmöglichkeit besteht. Das bedeutet, dass ein Abgleich zwischen den erfassten Daten aus den beiden Erfassungsschritten sowie der daraus resultierenden prädizierten Position und einer tatsächlich referenzierbaren Position möglich ist. Woher die Daten für die tatsächliche referenzierbare Position stammen, ist dabei für die Optimierung selbst unerheblich.

Ein weiterer Vorteil ist es, wenn bei einem erfindungsgemäßen Verfahren bei zumindest einem der beiden Erfassungsschritte eine Diskretisierung der erfassten Daten erfolgt. Das bedeutet, dass die erfassten Daten trotz ihrer kontinuierlichen Erfassung in diskrete Teilschritte zerlegt werden. Mit anderen Worten kann für bestimmte Zeitschritte, also pro Zeiteinheit von einer halben Sekunde, einer Sekunde oder längerer oder kürzerer Zeitspannen, jeweils nur ein einziger Datenpunkt der erfassten Daten gespeichert werden. Dies ermöglicht einerseits für den aktuellen Betrieb des Fahrzeugs eine kontinuierliche Überwachung, andererseits für die Speicherung eine Reduktion der Daten auf ein Minimum. Durch die Reduktion des Speicherbedarfs für die erfassten Daten reicht zum einen ein geringerer Speicher für diese Daten zur Verfügung aus, zum anderen wird eine Möglichkeit geschaffen, um auch umfangreiche Umfeldmodelle zu erstellen und zu speichern. Je umfangreicher die Umfeldmodelle sind, umso besser kann sich das Fahrzeug auch in komplexen Umfeldern bewegen bzw. umso längere Fahrten können für eine Erzeugung eines erfindungsgemäßen Umfeldmodells Verwendung finden.

Erfindungsgemäß ist vorgesehen, dass bei einem erfindungsgemäßen Verfahren das Fehlermodell zumindest teilweise für den Fahrer des Fahrzeugs spezifisch ist. Die Spezifität für den Fahrer zeichnet sich z.B. hinsichtlich dessen Art der Steuerung des Fahrzeugs aus. Gibt er schnell oder langsam Gas, bremst er leicht oder scharf ab, oder verwendet er die Lenkung stark oder weniger stark. All diese Spezifika für einen Fahrer haben unterschiedlichen Einfluss auf die Fehleranfälligkeit der Inertialsensoren. So ist beispielsweise ein kräftiges Beschleunigen mit einem Durchdrehen der Räder korreliert, welches zwar eine Radumdrehung den Inertialsensoren mitteilt, wobei diese Raddrehung keinerlei Vortrieb erzeugt. Dementsprechend würde hier ein Fehler induziert, welcher bei vorsichtigen Fahrern selten oder überhaupt nicht auftritt. Die Spezifikation des erfindungsgemäßen Verfahrens auf den Fahrer hat also den Vorteil, dass nicht nur Fahrzeugspezifika, sondern auch die Betriebsart des Fahrzeugs im Fehlermodell berücksichtigt werden.

Ebenfalls vorteilhaft ist es, wenn bei einem erfindungsgemäßen Verfahren bei zumindest einem der beiden Erfassungsschritte pro Zeitschritt wenigstens zwei Messpunkte erfasst werden. Das bedeutet, dass von zumindest einem Sensor zumindest zwei Messpunkte, also z.B. zwei Punkte eines Objekts, welches wahrgenommen wird, erfasst werden. Auf diese Weise ist es möglich, statt eines zweidimensionalen Abbildes sogar ein dreidimensionales Abbild der Umgebung zu zeichnen, insbesondere den Umgebungsbereich, welcher von der Sensorik erfasst wird, zu vergrößern. Das Erhöhen der Komplexität des Umfeldmodells von der zweiten in die dritte Dimension hat den Vorteil, dass eine noch genauere Steuerung durch eine Steuereinheit eines Fahrzeugs, welche auf den Daten eines erfindungsgemäßen Verfahrens basiert, durchgeführt werden kann.

Ein weiterer Gegenstand der vorliegenden Erfindung ist ein Manöverassistenzsystem für ein Fahrzeug zur Ausführung eines erfindungsgemäßen Verfahrens. Ein entsprechendes Manöverassistenzsystem weist dementsprechend die gleichen Vorteile auf, wie sie ausführlich voranstehend erläutert worden sind.

Bei einem erfindungsgemäßen Manöverassistenzsystem ist das Umfeldsensorsystem zumindest mit einem der folgenden Sensoren ausgestattet:
- Videosensor, insbesondere Stereovideosensor,
- Laserscanner,
- Ultraschallsensor.

Die voranstehenden Sensoren sind dabei vorteilhafterweise Sensoren, die in dem Fahrzeug bereits für andere Zwecke vorhanden sind, also z.B. als Rückfahrkamera oder als Ultraschallparksensor im Einsatz sind.

Bei dem zuvor erwähnten Fahrzeug handelt es sich vorzugsweise um einen Personenkraftwagen oder einen Lastkraftwagen. Selbstverständlich können auch andere Fahrzeugtypen, wie Nutzfahrzeuge o.ä., gemeint sein.

Die voranstehende Erfindung wird näher erläutert anhand der beigefügten Zeichnungsfiguren. Die dabei verwendeten Begriffe "link", "rechts", "oben" und "unten" beziehen sich dabei auf eine Ausrichtung der Zeichnungsfiguren mit normal lesbaren Bezugszeichen. Es zeigen:
Fig. 1a in schematischer Darstellung die Draufsicht eines Fahrzeugs zu zwei Zeitpunkten mit der prädizierten Route,
Fig. 1b die Darstellung der Fig. 1a, mit der realen Position des Fahrzeugs nach Abfahren der Route,

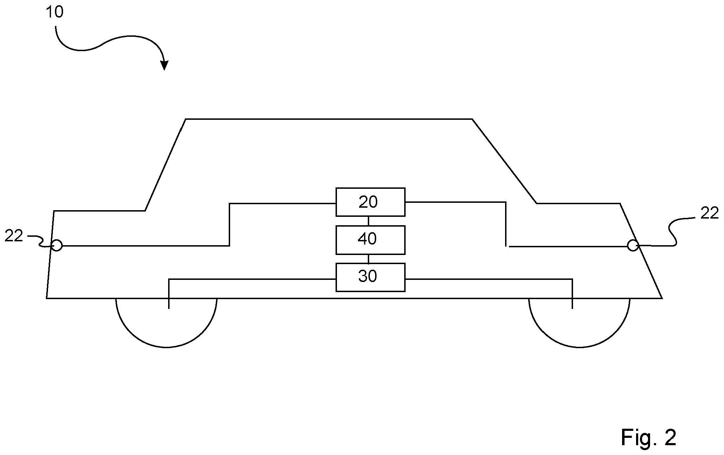

Fig. 2 eine schematische Darstellung eines erfindungsgemäßen Manöverassistenzsystems für ein Fahrzeug.

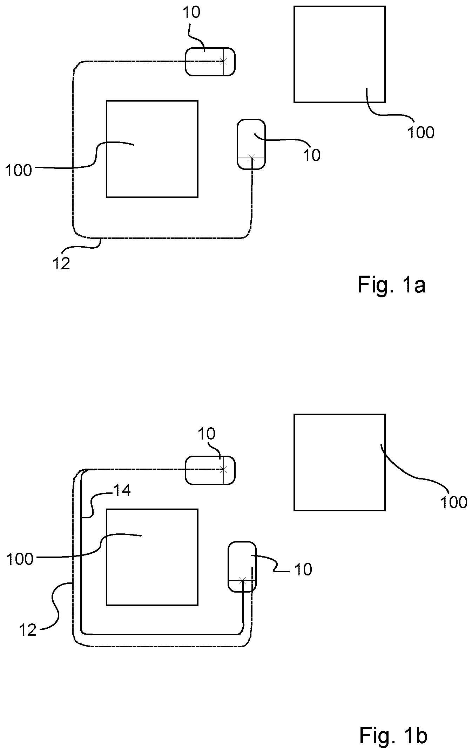

Anhand der Fig. 1a und 1b wird kurz die Funktionsweise eines erfindungsgemäßen Verfahrens erläutert. So weist ein Fahrzeug 10 einen eigenen Referenzpunkt auf, z.B. dem Mittelpunkt der Hinterachse in einer Ausgangsposition, welches sich zu Beginn in der oberen der beiden Positionen in den beiden Figuren befindet. Folgt nun das Fahrzeug 10 einer Trajektorie, so gelangt es in eine Endposition, nämlich die untere der beiden Positionen in den beiden Fig. 1 a und 1b.

Ist das Fahrzeug 10 in dieser Endposition angelangt, so befindet es sich in einer Position, welche sowohl eine reale Position aufweist, bzw. welcher eine prädizierte Position zugewiesen ist. In dem Ausführungsbeispiel der Fig. 1 a handelt es sich bei der Endposition um die prädizierte Position des Fahrzeugs 10. Das bedeutet, dass das Fahrzeug 10 während des Verlaufs, also während seiner Bewegung zur Endposition eine Vielzahl von Sensoren im Einsatz hatte. Dabei wurde sowohl Umfeldsensorik eingesetzt, als auch Inertialsensorik. Die Umfeldsensorik hat bei dieser Bewegung zwei Umfeldobjekte 100, in diesem Fall zwei feste Objekte, z.B. andere Fahrzeuge erkannt. Um das linke dieser beiden Umfeldobjekte 100 ist das Fahrzeug 10 um dreiviertel herumgefahren. Während dieses Vorgangs haben die Inertialsensoren des Fahrzeugs 10 dessen kinematische Fahrzeuggrößen an eine Steuereinheit des Fahrzeugs 10 übermittelt, welche diese ausgewertet hat. Durch die Auswertung der Daten wird eine prädizierte Trajektorie 12 aufgezeichnet. Diese ist in Fig. 1a und 1b jeweils mit einer gestrichelten Linie dargestellt.
Jedoch sind die Sensormessungen und damit die Auswertung der Daten fehlerbehaftet. Insbesondere die Inertialsensoren sind fehlerbehaftet, da sie insbesondere bei langsamen Fahrten nur ein ungenügendes Abbild der tatsächlichen Bewegung des Fahrzeugs 10 geben können. Dementsprechend entspricht der Endpunkt des Fahrzeugs 10 in der Fig. 1 a nicht dessen realem Endpunkt. Vielmehr befindet sich das Fahrzeug 10 nach Beendigung des Abfahrens der Parktrajektorie an einer realen Position, wie sie in Fig. 1b dargestellt ist. Die beiden Endpositionen der beiden Fig. 1 a und 1b unterscheiden sich voneinander. Der Unterschied liegt darin, dass es sich bei der Fig. 1b um die reale Position, bei der Fig. 1 a um die prädizierte Position handelt.

Um nun sicherzustellen, dass bei dem Erstellen eines Umfeldmodells um das Fahrzeug 10 herum dieser Fehler korrigiert wird bzw. sich beim weiteren Fortfahren durch das Fahrzeug 10 nicht akkumuliert, muss eine Korrektur der Position erfolgen. Dies erfolgt dadurch, dass ein Fehlermodell angesetzt wird, um bei der kontinuierlichen Erfassung der Umgebung des Fahrzeugs 10 sowie bei der kontinuierlichen Erfassung der kinematischen Fahrzeuggrößen die jeweils prädizierte Position durch eine korrigierte Position zu ersetzen. Durch diese Korrektur ändert sich nicht nur die Endposition des Fahrzeugs 10, sondern darüber hinaus die während dessen Bewegung wahrgenommene Trajektorie, nämlich die reale Trajektorie 14. Mit anderen Worten wird nicht nur die Positionierung zum Endpunkt des Fahrzeugs 10 verbessert, sondern dessen Einzelpositionierung im Ablauf der gesamten Bewegung. Auf diese Weise wird der gesamte Bewegungsablauf korrigiert und in optimierter Weise der realen Position bzw. dem realen Bewegungsablauf des Fahrzeugs 10 angepasst.
Um ein erfindungsgemäßes Verfahren durchführen zu können, ist ein Fahrzeug 10 mit einem Manöverassistenzsystem 40 ausgestattet. Dieses Manöverassistenzsystem 40 weist ein Umfeldsensorsystem 20 und ein Inertialsensorsystem 30 auf bzw. kommuniziert mit entsprechenden Systemen 20 oder 30, die bereits im Fahrzeug 10 vorhanden sind. Die Kommunikation kann dabei sowohl in analoger, als auch in digitaler Weise erfolgen. Das Umfeldsensorsystem 20 ist vorzugsweise mit wenigstens einem Sensor 22 ausgestattet, welcher insbesondere vorne und/oder hinten am Fahrzeug 10 angeordnet ist, um dessen Umgebung wahrzunehmen. Das Manöverassistenzsystem 40 ist darüber hinaus mit einer Auswerte- und/oder einer Steuereinheit ausgebildet, in welcher die Daten, die von jeweiligen Sensorsystemen 20 und 30 erfasst worden sind, hinsichtlich einer prädizierten Position des Fahrzeugs 10 ausgewertet werden. Bei dieser Auswertung erfolgt im Manöverassistenzsystem 40 darüber hinaus die Korrektur mit Hilfe des Fehlermodells, wobei das Fehlermodell zumindest teilweise für den Fahrer des Fahrzeugs 10 spezifisch ist. Selbstverständlich ist es auch möglich, dass mit Hilfe des Manöverassistenzsystems 40 die Korrektur, bzw. die Optimierung, also die Online-Veränderung im Betrieb des Fahrzeugs 10, für das Fehlermodell durchgeführt werden.
Die voranstehenden Ausführungsformen beschreiben die Erfindung nur im Rahmen von Beispielen. Dementsprechend können die beschriebenen Beispiele, sofern technisch sinnvoll, frei miteinander kombiniert werden, ohne den in den Ansprüchen definierten Rahmen der vorliegenden Erfindung zu verlassen.

## Patentansprüche

1. Verfahren zur Bestimmung der Position eines sich bewegenden Fahrzeugs (10) bezüglich das Fahrzeug (10) umgebenden Umfeldobjekten (100), aufweisend die folgenden Schritte:
• Erfassen der Umgebung des Fahrzeuges (10) mithilfe eines Umfeldsensorsystems (20),
• Erfassen kinematischer Fahrzeuggrößen des Fahrzeugs (10) mithilfe eines Inertialsensorsystems (30),
• Prädiktion der Position des Fahrzeugs (10) auf Basis zumindest eines der vorangegangenen Erfassungsschritte,
• Anwendung eines Fehlermodells auf die prädizierte Position des Fahrzeugs (10) zur Erzeugung einer korrigierten Position des Fahrzeugs (10),
**dadurch gekennzeichnet, dass** das Fehlermodell zumindest teilweise für den Fahrer des Fahrzeugs (10) spezifisch ist.

2. Verfahren nach Anspruch 1, **dadurch gekennzeichnet, dass** Daten, die durch zumindest einen der beiden Erfassungsschritte erzeugt werden, gespeichert werden, um ein Umfeldmodell von das Fahrzeug (10) umgebenden Umfeldobjekten (100) zu erstellen.

3. Verfahren nach einem der vorangegangenen Ansprüche, **dadurch gekennzeichnet, dass** es sich bei dem Fehlermodell um ein für das Fahrzeug (10) ausgelegtes und vordefiniertes Fehlermodell handelt.

4. Verfahren nach einem Ansprüche 1 bis 3, **dadurch gekennzeichnet, dass** das Fehlermodell zumindest teilweise während des Betriebs des Fahrzeuges (10) erstellt und/oder optimiert wird.

5. Verfahren nach einem der vorangegangenen Ansprüche, **dadurch gekennzeichnet, dass** bei zumindest einem der beiden Erfassungsschritte eine Diskretisierung der erfassten Daten erfolgt.

6. Verfahren nach einem der vorangegangenen Ansprüche, **dadurch gekennzeichnet, dass** bei zumindest einem der beiden Erfassungsschritte pro Zeitschritt wenigstens zwei Messpunkte erfasst werden.

7. Manöverassistenzsystem (40) für ein Fahrzeug (10), das für die Ausführung eines Verfahrens mit den Merkmalen eines der vorangegangenen Ansprüche ausgebildet ist,
wobei das Manöverassistenzsystem (40) ein Umfeldsensorsystem (20) und ein Inertialsensorsystem (30) aufweist, oder das Manöverassistenzsystem (40) dazu ausgebildet ist, mit einem Umfeldsensorsystem (20) und einem Inertialsensorsystem (30) in dem Fahrzeug (10) zu kommunizieren, oder das Manöverassistenzsystem (40) ein Umfeldsensorsystem (20) oder ein Inertialsensorsystem (30) aufweist und dazu ausgebildet ist, mit dem jeweils anderen System (30, 20) zu kommunizieren, wobei das Manöverassistenzsystem (40) eine Auswerte- und/oder eine Steuereinheit aufweist, die dazu ausgebildet ist, die von dem Umfeldsensorsystem (20) und dem Inertialsensorsystem (30) erfassten Daten hinsichtlich einer prädizierten Position des Fahrzeugs (10) auszuwerten, wobei
das Manöverassistenzsystem (40) dazu ausgebildet ist, ein Fehlermodell auf die prädizierte Position des Fahrzeugs (10) zur Erzeugung einer korrigierten Position des Fahrzeugs (10) anzuwenden,
**dadurch gekennzeichnet, dass** das Fehlermodell zumindest teilweise für den Fahrer des Fahrzeugs (10) spezifisch ist.

8. Manöverassistenzsystem (40) nach Anspruch 7, **dadurch gekennzeichnet, dass** das Umfeldsensorsystems (20) zumindest einen der folgenden Sensoren (22) aufweist:
• Videosensor, insbesondere Stereo-Video,
• Laser-Scanner,
• Ultraschallsensor.

## Claims

1. Method for determining the position of a moving vehicle (10) with respect to environment objects (100) surrounding the vehicle (10), having the following steps of:
• capturing the environment of the vehicle (10) with the aid of an environmental sensor system (20),
• capturing kinematic vehicle variables of the vehicle (10) with the aid of an inertial sensor system (30),
• predicting the position of the vehicle (10) on the basis of at least one of the preceding capture steps,
• applying a fault model to the predicted position of the vehicle (10) in order to generate a corrected position of the vehicle (10),
**characterized in that** the fault model is at least partially specific to the driver of the vehicle (10).

2. Method according to Claim 1, **characterized in that** data generated by at least one of the two capture steps are stored in order to create an environmental model of environment objects (100) surrounding the vehicle (10).

3. Method according to one of the preceding claims, **characterized in that** the fault model is a fault model which is designed and predefined for the vehicle (10).

4. Method according to one of Claims 1 to 3, **characterized in that** the fault model is at least partially created and/or optimized during operation of the vehicle (10).

5. Method according to one of the preceding claims, **characterized in that** the captured data are discretized during at least one of the two capture steps.

6. Method according to one of the preceding claims, **characterized in that** at least two measurement points are captured during at least one of the two capture steps for each time step.

7. Manoeuvring assistance system (40) for a vehicle (10), which is designed to carry out a method having the features of one of the preceding claims,
the manoeuvring assistance system (40) having an environmental sensor system (20) and an inertial sensor system (30), or the manoeuvring assistance system (40) being designed to communicate with an environmental sensor system (20) and an inertial sensor system (30) in the vehicle (10), or the manoeuvring assistance system (40) having an environmental sensor system (20) or an inertial sensor system (30) and being designed to communicate with the other system (30, 20) in each case, the manoeuvring assistance system (40) having an evaluation and/or control unit which is designed to evaluate the data captured by the environmental sensor system (20) and the inertial sensor system (30) with regard to a predicted position of the vehicle (10),
the manoeuvring assistance system (40) being designed to apply a fault model to the predicted position of the vehicle (10) in order to generate a corrected position of the vehicle (10), **characterized in that** the fault model is at least partially specific to the driver of the vehicle (10).

8. Manoeuvring assistance system (40) according to Claim 7, **characterized in that** the environmental sensor system (20) has at least one of the following sensors (22):
• video sensor, in particular stereo video,
• laser scanner,
• ultrasonic sensor.

## Revendications

1. Procédé de détermination de la position d'un véhicule en mouvement (10) par rapport à des objets environnants (100) dans le voisinage du véhicule (10), comprenant les étapes consistant à :
- détecter l'environnement du véhicule (10) à l'aide d'un système de capteurs d'environnement (20),
- détecter des grandeurs cinématiques de véhicule pour le véhicule (10) à l'aide d'un système de capteurs inertiels (30),
- prédire la position du véhicule (10) sur la base d'au moins l'une des étapes de détection précédentes,
- appliquer un modèle d'erreur à la position prédite du véhicule (10) pour générer une position corrigée du véhicule (10),
**caractérisé en ce que** le modèle d'erreur est au moins partiellement spécifique du conducteur du véhicule (10).

2. Procédé selon la revendication 1, **caractérisé en ce que** des données qui sont générées par au moins l'une des deux étapes de détection sont stockées afin d'établir un modèle d'environnement d'objets environnants (100) au voisinage du véhicule (10).

3. Procédé selon l'une quelconque des revendications précédentes, **caractérisé en ce que** le modèle d'erreur est un modèle d'erreur configuré et prédéfini pour le véhicule (10).

4. Procédé selon l'une quelconque des revendications 1 à 3, **caractérisé en ce que** le modèle d'erreur est au moins partiellement établi et/ou optimisé pendant le fonctionnement du véhicule (10).

5. Procédé selon l'une quelconque des revendications précédentes, **caractérisé en ce qu'**une discrétisation des données détectées est effectuée lors d'au moins l'une des deux étapes de détection.

6. Procédé selon l'une quelconque des revendications précédentes, **caractérisé en ce qu'**au moins deux points de mesure sont détectés à chaque pas temporel lors d'au moins l'une des deux étapes de détection.

7. Système d'aide à la manoeuvre (40) destiné à un véhicule (10), qui est réalisé pour mettre en oeuvre un procédé présentant les caractéristiques de l'une des revendications précédentes, dans lequel le système d'aide à la manoeuvre (40) comporte un système de capteurs d'environnement (20) et un système de capteurs inertiels (30), ou le système d'aide à la manoeuvre (40) est conçu pour communiquer avec un système de capteurs d'environnement (20) et un système de capteurs inertiels (30) dans le véhicule (10), ou le système d'aide à la manoeuvre (40) comporte un système de capteurs d'environnement (20) ou un système de capteurs inertiels (30) et est conçu pour communiquer respectivement avec chacun des autres systèmes (30, 20), dans lequel le système d'aide à la manoeuvre (40) comporte une unité d'évaluation et/ou de commande qui est conçue pour évaluer les données détectées par le système de capteurs d'environnement (20) et le système de capteurs inertiels (30) en ce qui concerne une position prédite du véhicule (10), dans lequel le système d'aide à la manoeuvre (40) est conçu pour appliquer un modèle d'erreur à la position prédite du véhicule (10) afin de générer une position corrigée du véhicule (10),
**caractérisé en ce que** le modèle d'erreur est au moins partiellement spécifique du conducteur du véhicule (10).

8. Système d'aide à la manoeuvre (40) selon la revendication 7, **caractérisé en ce que** le système de capteurs d'environnement (20) comporte au moins l'un des capteurs (22) suivantes :
- un capteur vidéo, notamment à stéréovision,
- un dispositif de balayage à laser,
- un capteur à ultrasons.
